**Europäisches Patentamt**

**European Patent Office**

**Office européen des brevets**

(19)

(11) Veröffentlichungsnummer: **0 238 813 B1**

(12) **EUROPÄISCHE PATENTSCHRIFT**

(45) Veröffentlichungstag der Patentschrift: **19.05.93**

(51) Int. Cl.5: **H04B 3/54**, H04L 1/02, H04B 1/66

(21) Anmeldenummer: **87101580.6**

(22) Anmeldetag: **05.02.87**

(54) **Verfahren zur Übermittlung von Daten über die Leitungen eines Stromversorgungsnetzes.**

(30) Priorität: **27.02.86 DE 3606354**

(43) Veröffentlichungstag der Anmeldung:
**30.09.87 Patentblatt 87/40**

(45) Bekanntmachung des Hinweises auf die
Patenterteilung:
**19.05.93 Patentblatt 93/20**

(84) Benannte Vertragsstaaten:
**CH DE FR GB IT LI SE**

(56) Entgegenhaltungen:
EP-A- 0 208 872          DE-A- 3 230 726
GB-A- 2 094 598          GB-A- 2 133 955
GB-A- 2 161 344          US-A- 4 479 215

ARCHIV FÜR ELEKTRONIK UND ÜBERTRA-
GUNGSTECHNIK AEÜ, Band 33, Nr. 7/8,
Juli/August 1979, Seiten 269-277; J. KREB-
SER: "Übertragungsverhalten von FH-
DPSK-Systemen bei frequenzselektivem
Signalschwund und Teilbandstörungen"

IEEE TRANSACTIONS ON COMMUNICA-
TIONS, Band COM-33, Nr. 8, August 1985,
Seiten 767-774, New York, US; M.B. PURS-
LEY et al.: "Performance of Reed-Solomon
coded frequency-hop spread-spectrum
communications in partial-band interference"

(73) Patentinhaber: **Datawatt BV**
**Houtstraat 5**
**NL-8471 ZX Wolvega(NL)**

(72) Erfinder: **Braun, Walter, Dr., Dipl.-Ing.**
**Zentralstrasse 137**
**CH-5430 Wettingen(CH)**
Erfinder: **Hagmann, Walter, Dr.-Ing.**
**Pilgerstrasse 22**
**CH-5405 Dättwil(CH)**

(74) Vertreter: **Ottow, Jens M., Dr.**
**c/o Hug Interlizenz AG, Austrasse 44 Post-**
**fach**
**CH-8045 Zürich (CH)**

**Beschreibung**

Die vorliegende Erfindung betrifft ein Verfahren zur Uebertragung von Daten über die Leitungen eines Stromversorgungsnetzes. Ein solches Verfahren ist z.B. aus der DE – OS 25 45 985 oder der GB 2 133 955 bekannt. Dem Austausch von Daten zwischen verschiedenen Stationen über ein Stromverteilungsnetz kommt eine wachsende Bedeutung zu. So gibt es beispielsweise Bestrebungen der Elektrizitätsversor – gungsunternehmen, durch direkte Steuerung bzw. Abfrage von Endverbrauchern, die Auslastung des Netzes zu optimieren.

Ein solcher Datenaustausch muss die nachrichtentechnischen Gegebenheiten berücksichtigen, die dem Stromversorgungsnetz in seiner Eigenschaft als Nachrichtenkanal zukommen. So werden auf der Nieder – und Mittelspannungsebene des Netzes Störungen in der Uebertragung wirksam, die auf zeit – und frequenzselektive Schwunderscheinungen sowie auf die Rauscheigenschaften des Kanals zurückzuführen sind. Diese Störungen führen dazu, dass herkömmliche Uebertragungsverfahren, welche das Stromversor – gungsnetz als Nachrichtenkanal verwenden, nur eine eingeschränkte Verfügbarkeit der Nachrichtenverbin – dung aufweisen.

In der US 4,479,215 wird zur Verbesserung der Verfügbarkeit der Nachrichtenverbindung über ein Medium ein Verfahren mit mehreren Frequenzen und sehr langsamen Hüpfen von einer Frequenz zur anderen kombiniert mit Quittungssignalen benutzt. Dadurch können die frequenzselektiven Schwunder – scheinungen auf ein gewisses Mass zurückgedrängt werden.

Im AEÜ Band 33, Heft 7/8 1979, wird das Uebertragungsverhalten von FH – DPSK – (Frequency – Hopping – Differential – Phase – Shift – Keying) – Systemen bei frequenzselektivem Signalschwund und Teil – bandstörungen in drahtlosen Nachrichtensystemen beschrieben. Durch die Anwendung von Frequenzhüp – fertechniken kombiniert mit Mehrfachübertragung kann eine ausgezeichnete Störfestigkeit erzielt werden. Bei der Mehrfachübertragung wird ein Informationsseichen an mehreren Stellen des Trägerfrequenzbandes übertragen. Wird dieses Verfahren noch mit dem Einsatz eines fehlerkorrigierenden Codes kombiniert, so kann der Mehrfachübertragungsgrad reduziert werden, da eine grössere Kanal – Fehlerrate zulässig ist.

Aufgabe der vorliegenden Erfindung ist es nun, ein Verfahren zur Datenübermittlung über ein Strom – versorgungsnetz anzugeben, welches sich durch eine verbesserte Verfügbarkeit der so geschaffenen Nachrichtenverbindung auszeichnet.

Diese Aufgabe wird beim erfindungsgemässen Verfahren durch die Merkmale des Anspruchs 1 gelöst.

Der Kern der Erfindung ist darin zu sehen, dass die Störungen des Stromversorgungsnetzes, insbe – sondere die zeit – und frequenzselektiven Schwunderscheinungen, durch eine Mehrfachübertragung jeder Information hinsichtlich Zeit (time diversity) und hinsichtlich der Trägerfrequenz (frequency diversity), in ihrem Einfluss auf die Nachrichtenübermittlung wenn nicht neutralisiert, so doch wenigstens deutlich zurückgedrängt werden.

Wird also beispielsweise eine Information bei ihrer ersten Uebertragung auf einer ersten Trägerfrequenz durch eine in diesem Frequenzbereich zu dieser Zeit auftretende Störung unrichtig oder verstümmelt übermittelt, so besteht eine grosse Wahrscheinlichkeit dafür, dass dieselbe Information bei einer späteren nochmaligen Uebertragung auf einer anderen Trägerfrequenz nicht noch einmal einer Störung ausgesetzt ist.

Als Modulationsart wird für das vorgeschlagene Verfahren bevorzugt die Phasenumtastung (PSK = Phase Shift Keying) verwendet und mit einem pseudo – zufälligen, sprunghaften Aendern der Trägerfre – quenz während der Uebertragung nach Art des an sich bekannten Frequenzhüpf – Verfahrens (FH = Frequency Hopping) verknüpft (FH/PSK). Das empfangene phasengetastete Signal wird dann nach einem besonderen Verfahren trotz der sich pseudo – zufällig ändernden Trägerfrequenz kohärent detektiert.

Weitere bevorzugte Ausgestaltungen des Verfahrens nach der Erfindung ergeben sich aus den Unteransprüchen.

Die Erfindung soll nun nachfolgend im Zusammenhang mit der Zeichnung anhand von Ausführungs – beispielen näher erläutert werden. Es zeigen:

Fig. 1    die schematische Anordnung eines Uebertragungssystems zur Durchführung des erfindungs – gemässen Verfahrens mit einem Sender und einem Empfänger;

Fig. 2    den inneren Aufbau eines Senders gemäss Fig. 1 für eine bevorzugte Ausführungsform des Verfahrens;

Fig. 3    die Darstellung der Mehrfachübertragung mit Zeit – und Frequenz – Diversity im Frequenz – Zeit – Diagramm;

Fig. 4    den inneren Aufbau eines Empfängers gemäss Fig. 1 in einer zum Sender gemäss Fig. 2 passenden Ausgestaltung;

Fig. 5    den inneren Aufbau eines Quadraturdemodulators für den Empfänger nach Fig. 4;

2

Fig. 6       den inneren Aufbau eines Trägerphasendetektors für den Empfänger nach Fig. 4;

Fig. 7       eine schematische Anordnung für die Kombination mehrfach übertragener, gewichteter Symbole; und

Fig. 8       den inneren Aufbau eines Signalstärkendetektors für einen Empfänger gemäss Fig. 4.

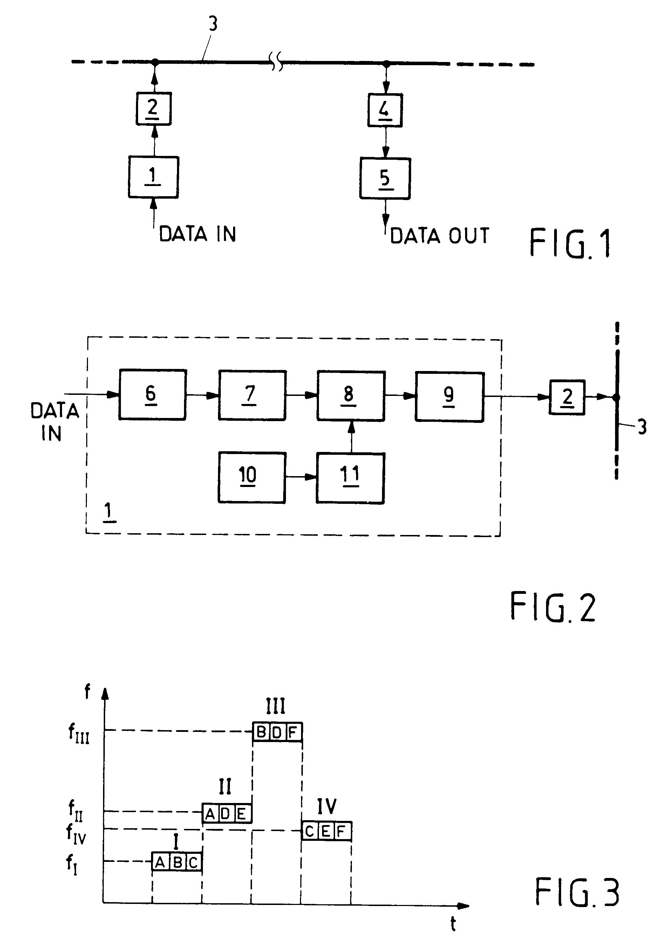

In Fig. 1 ist die grundsätzliche, schematische Anordnung für ein Uebertragungssystem dargestellt, wie es für die Durchführung des erfindungsgemässen Verfahrens Verwendung findet.

Die zu übermittelnden Daten gelangen auf den Dateneingang eines Senders 1, werden dort auf eine geeignete Trägerfrequenz aufmoduliert und über ein erstes Koppelglied 2, beispielsweise einen Koppelkondensator, auf eine Netzleitung 3 eines Stromversorgungsnetzes gegeben. Die Netzleitung 3 kann Teil der Nieder- oder Mittelspannungsebene des Stromversorgungsnetzes sein, kann jedoch ebensogut teilweise in der Niederspannungsebene und teilweise in der Mittelspannungsebene verlaufen. Die im letztgenannten Fall vorhandenen Unterstationen und Transformatoren sind in der Figur der Einfachheit halber nicht eingezeichnet.

Ueber die Netzleitung 3 wird die modulierte Trägerfrequenz an einen Empfänger 5 übermittelt, der durch ein zweites Koppelglied 4 an die Netzleitung 3 angekoppelt ist. Im Empfänger 5 werden die Daten durch Demodulation des Empfangssignals wiedergewonnen und stehen an einem Datenausgang zur weiteren Verarbeitung zur Verfügung.

Der innere Aufbau des Senders 1 aus Fig. 1, wie er für eine bevorzugte Ausführungsform des Verfahrens geeignet ist, ist in Fig. 2 wiedergegeben, wobei gleiche Teile mit den gleichen Bezugszeichen versehen sind.

Die zu übermittelnden Daten werden innerhalb des Senders 1 zunächst auf einen Kodierer 6 gegeben, der vorzugsweise mit einem "forward error correction code" arbeitet. Einzelheiten über den Code und den Kodierer können beispielsweise aus dem Buch von W. Peterson und E. Weldon, "Error correcting codes", MIT Press, Cambridge, USA, 1972, entnommen werden.

Die bei der Kodierung der Daten anfallenden Symbole werden anschliessend in einem Symbol-Replikator 7 so oft vervielfacht, wie das Symbol übermittelt werden soll. Wird jede Information gemäss einer bevorzugten Ausführungsform des Verfahrens jeweils zweimal übertragen, so werden in dem Symbol-Replikator 7 aus jedem ankommenden Symbol zwei gleichartige Symbole erzeugt.

Die Symbole und ihre jeweiligen Replikate, die zunächst direkt aufeinanderfolgen, werden im Symbol-Replikator 7 so umgestellt, dass Symbole, die vorher direkt nebeneinanderlagen, nun weit voneinander entfernt sind. Diese Neuordnung der Symbole kann z.B. dadurch herbeigeführt werden, dass die Symbole Reihe für Reihe in die Matrix eines zweidimensionalen Speichers eingelesen und anschliessend Spalte für Spalte wieder ausgelesen werden. Eine andere, besonders bevorzugte Art der Neuordnung wird bei einer bestimmten Art der Mehrfachübertragung verwendet und an späterer Stelle im Zusammenhang mit der Fig. 3 erläutert.

Die umgeordneten Symbole gelangen von dem Symbol-Replikator 7 zu einem Modulator 8, wo sie auf die Trägerfrequenz, bzw. eine Folge von wechselnden Trägerfrequenzen, aufmoduliert werden. Die Trägerfrequenzen springen dabei vorzugsweise gemäss dem bekannten FH-Verfahren jeweils nach der Uebertragung einer bestimmten Anzahl von Symbolen, eines sogenannten Blocks, auf einen anderen Wert. Die angenommenen Trägerfrequenz-Werte sind pseudo-zufällig ausgewählt.

Realisiert wird dieses Hüpfen der Trägerfrequenz durch einen Trägerfrequenzgenerator 11, der die Trägerfrequenz, gesteuert durch eine pseudo-zufällig arbeitende Frequenzauswahlschaltung 10, erzeugt. Die Frequenzauswahlschaltung 10 gibt dem Trägerfrequenzgenerator 11 nicht nur den Trägerfrequenz-Wert vor, sondern sorgt zugleich dafür, dass eine neue Trägerfrequenz erzeugt wird, sobald ein Block von Symbolen mit vorgegebener Blocklänge übertragen worden ist.

Der Modulator 8 ist vorzugsweise ein PSK-Modulator mit m zugelassenen Phasenwerten (m-PSK), insbesondere ein BPSK-Modulator (BPSK = Binary PSK), der die Trägerfrequenz in Abhängigkeit von den Symbolen zwischen zwei zugelassenen Phasenwerten umtastet.

Das modulierte Signal wird schliesslich auf einen nachgeschalteten Leistungsverstärker 9 gegeben, wo es verstärkt und dann über das Koppelglied 2 in die Netzleitung 3 eingekoppelt wird.

Wie oben bereits angedeutet, kann die Umstellung bzw. Neuordnung der Symbolfolge im Symbol-Replikator 7 durch geeignetes Ein- und Auslesen eines zweidimensionalen Speichers erfolgen. Eine spezielle Art der Umordnung ist jedoch dann erforderlich, wenn gemäss einer bevorzugten Ausführungsform des Verfahrens die Mehrfachübertragung der Information in einem FH/PSK-Verfahren besonderer Ausgestaltung vorgenommen wird, um eine Trägersynchronisation und damit eine kohärente Demodulation des Empfangssignals zu ermöglichen.

Ein solches FH/PSK-Verfahren ist Gegenstand der Europäischen Patentanmeldung EP-A1-0 208 872, veröffentlicht am 21.01.87. Bei diesem Verfahren werden, wie in Fig. 3 an einem Beispiel dargestellt, die Symbole A, ..., F, in Blöcken I, ..., IV zu je 3 Symbolen Länge zusammengefasst, jeweils mit einer dem Block zugeordneten Trägerfrequenz $f_I$, ..., $f_{IV}$ übertragen.

Jedes der Symbole A, ..., F wird zweimal, und zwar in unterschiedlichen Blöcken, übermittelt. Die Symbolfolge ist dabei so umgeordnet, dass jedes Paar von Symbolen (z.B. AB, BC, BD usw.) nur einmal, in einem Block, auftritt. Diese Vorschrift legt zugleich die Arbeitsweise des Symbol−Replikators 7 aus Fig. 2 fest.

Obgleich nun durch das Hüpfen der Trägerfrequenz zwischen den Symbolblöcken nicht vorhersehbare Phasenänderungen auftreten, ist eine empfängerseitige Synchronisation und damit eine kohärente Demodulation bei diesem angemeldeten Verfahren der Mehrfachübertragung möglich.

Dazu wird zunächst durch Mittelung über alle Symbolphasen eines Blocks für jeden Block eine mittlere Blockphase bestimmt. Dies geschieht bei der m−PSK−Modulation mit m äquidistanten zugelassenen Phasenwerten dadurch, dass zunächst durch eine Transformation alle Symbolphasen mit dem Faktor m multipliziert und dann über die transformierten Symbolphasen gemittelt wird. Die so erhaltene mittlere Blockphase ist m−fach (beim BPSK−Verfahren zweifach) entartet, d.h. m verschiedenen tatsächliche Blockphasen ist dieselbe mittlere Blockphase zugeordnet.

Um diese m−fache Unsicherheit zu beseitigen und die relativen Phasenbeziehungen zwischen den Blöcken eindeutig festlegen zu können, wird die in der Mehrfachübertragung jedes Symbols steckende Synchronisationsinformation ausgenutzt, und über ein Gleichungssystem mit Hilfe eines speziellen Algorithmus aus dem Empfangssignal gewonnen.

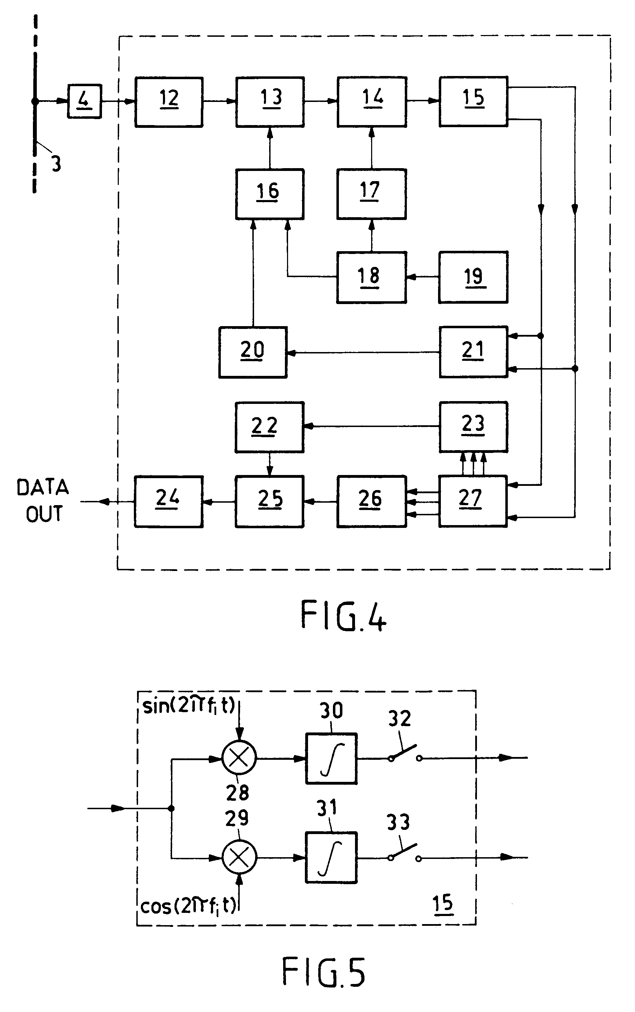

Die spezielle Art des bevorzugten FH/PSK−Verfahrens hat zugleich Auswirkungen auf den inneren Aufbau des Empfängers 5 aus Fig. 1. Dieser innere Aufbau ist in Fig. 4 wiedergegeben.

Von der Netzleitung 3 wird das Empfangssignal über das Koppelglied 4 abgenommen, in einem Filter 12 von anderen, störenden Frequenzen getrennt, und in einem Verstärker 13 mit einstellbarem Verstärkungsfaktor vorverstärkt.

Hinter dem Verstärker 13 ist eine Frequenzhüpferschaltung (dehopper) 14 angeordnet, in der das Empfangssignal mit seinen wechselnden Trägerfrequenzen in ein Signal mit konstanter Zwischenfrequenz umgesetzt wird. Zu diesem Zweck müssen der Frequenzhüpferschaltung 14 Frequenzen zugeführt werden, die in gleicher Weise wechseln, wie die senderseitig erzeugten Trägerfrequenzen. Dies geschieht dadurch, dass in einer empfängerseitigen Frequenzauswahlschaltung 18 alle Informationen, z.B. durch vorherige Uebertragung, vorhanden sind, um dieselbe pseudo−zufällige Frequenzfolge erzeugen zu können, wie im Sender.

Zu Beginn einer Datenübermittlung ermittelt nun eine Synchronisations−Suchschaltung 19 mittels einer geeigneten Suchstrategie, an welcher Stelle der Trägerfrequenzfolge sich das System befindet und synchronisiert dann die empfängerseitige Frequenzauswahlschaltung 18 mit der senderseitigen Frequenzauswahlschaltung 10.

Die empfängerseitige Frequenzauswahlschaltung 18 steuert Dann, in gleicher Weise wie im Sender 1, einen empfängerseitigen Trägerfrequenzgenerator 17.

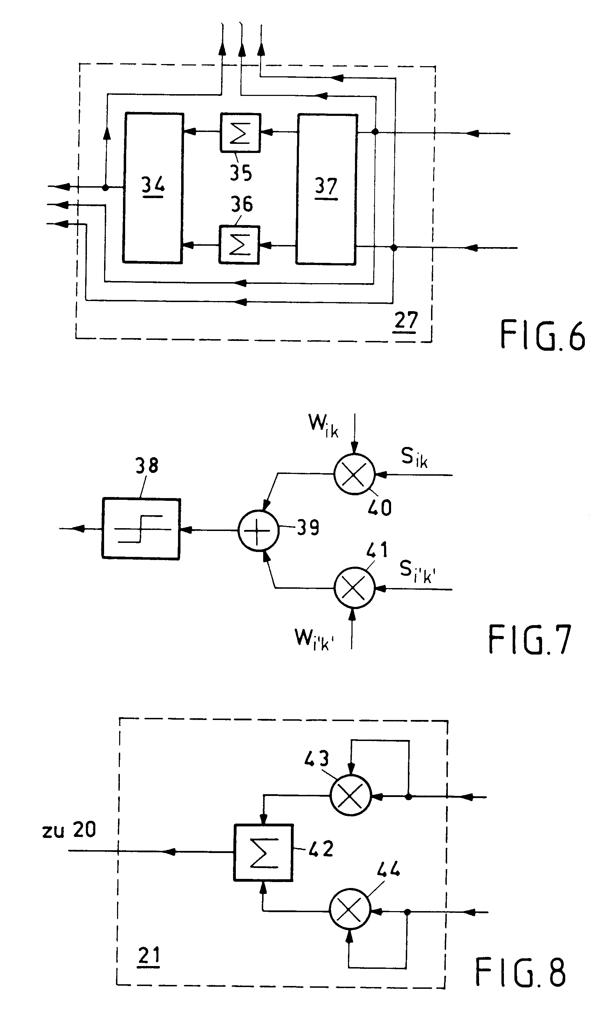

Am Ausgang der Frequenzhüpferschaltung 14 steht ein phasengetastetes Signal mit konstanter Zwischenfrequenz zur Verfügung, das in einem nachfolgenden Quadraturdemodulator 15 in seine beiden Quadraturzweige zerlegt wird. Der innere Aufbau eines geeigneten Quadraturdemodulators 15 ist in Fig. 5 in einem Ausführungsbeispiel dargestellt.

Im Quadraturdemodulator der Fig. 5 wird das ankommende phasengetastete Signal mit seiner konstanten Zwischenfrequenz, die hier mit $f_i$ bezeichnet werden soll, mittels zweier Multiplikatoren 28 und 29 jeweils mit einer Grösse proportional zu sin $(2\pi f_i t)$ und einer Grösse proportional zu cos $(2\pi f_i t)$ multipliziert. Aus den entstehenden Produktsignalen werden in zwei nachfolgenden Integratoren 30 und 31 die Wechselspannungsanteile weggefiltert. Die resultierenden Gleichspannungssignale, welche den Komponenten des Empfangssignal−Vektors in der zweidimensionalen Phasenebene entsprechen, werden danach von zwei Abtastern 32 und 33 jeweils zum optimalen Abtastzeitpunkt innerhalb jedes Symbolintervalls abgetastet. Die Abtastwerte gelangen schliesslich zur weiteren Verarbeitung zu weiteren Schaltungsteilen der Fig. 4.

Zum einen werden die Abtastwerte der beiden Quadraturzweige dem Eingang eines Signalstärkendetektors 21 zugeführt, der aus diesen Werten eine Grösse ermittelt, die der Stärke des empfangenen Signals entspricht. Eine solche Signalstärkenbestimmung lässt sich beispielsweise mit einer Schaltungsanordnung realisieren, wie sie in Fig. 8 wiedergegeben ist.

In der Anordnung nach Fig. 8 werden die Abtastwerte in zwei weiteren Multiplikatoren 43 und 44 jeweils quadriert und die quadrierten Abtastwerte beider Quadraturzweige in einem Summierer 42 für jeden Block von Symbolen, d.h. für jedes Intervall mit einer einheitlichen Trägerfrequenz, aufsummiert.

Das Ergebnis der Summation wird von dem Signalstärkendetektor 21 an einen Mittelwertbildner 20 weitergeleitet, der für jede Trägerfrequenz, d.h. für jeden Symbolblock, die mittlere Signalstärke ermittelt.

Diese Grösse wird dann dazu verwendet, über eine Verstärkungsfaktor – Auswahlschaltung 16 den Verstärkungsfaktor des Verstärkers 13 für jede Frequenz optimal einzustellen. Auf diese Weise wird den mit der Frequenz sich ändernden Uebertragungsverhältnissen im Kanal Rechnung getragen.

Zum anderen gelangen die Abtastwerte der Quadraturzweige in der Schaltung nach Fig. 4 auf den Eingang eines Trägerphasendetektors 27, der aus den Werten für jeden Block von Symbolen die bereits erwähnte mittlere Blockphase bestimmt.

Für die Bestimmung der mittleren Blockphase ist ein Schaltungsaufbau gemäss Fig. 6 geeignet, der zusammen mit der Anordnung nach Fig. 5 einen nichtlinearen, rückkopplungsfreien Phasenschätzer bildet, wie er aus dem Artikel von A.J. Viterbi und A.M. Viterbi, "Nonlinear Estimation of PSK – Modulated Carrier Phase with Application to Burst Digital Transmission", IEEE Transactions on Information Theory, Vol. IT – 29, No. 4, July 1983, S. 543 ff. bekannt ist.

Die Abtastwerte der Quadraturzweige werden in der Anordnung nach Fig. 6 zunächst in einer Transformationsschaltung 37 einer nichtlinearen Transformation unterworfen, die eine Vervielfachung der Symbolphase des abgetasteten Signals um einen Faktor m bewirkt, der gleich der Anzahl der zugelassenen Phasenwerte ist (dies gilt allgemein für m – PSK – Modulation; für BPSK wird die Phase verdoppelt).

Die Transformation in der Transformationsschaltung 37 bildet demnach die m zugelassenen, äquidistanten Phasenwerte auf einen m – fach entarteten Phasenwert ab. Die tatsächlich gemessenen, von den m zugelassenen Phasenwerten abweichenden Symbolphasen streuen nach der Transformation entsprechend um einen m – fach entarteten Mittelwert. Dieser m – fach entartete Mittelwert ist gleich der mittleren Blockphase, wenn über alle Symbolphasen eines Blocks gemittelt wird.

Die Bestimmung der mittleren Blockphase erfolgt durch Aufsummierung der transformierten Abtastwerte in zwei Summierern 35 und 36. Aus den gebildeten Summen errechnet dann ein Phasenrechner 34 durch Anwendung der inversen Tangensfunktion in bekannter Weise die mittlere Phase eines Blocks, die ihrerseits m – fach entartet ist und damit eine m – fache Mehrdeutigkeit besitzt. Die Mehrdeutigkeit lässt sich, wie bereits vorher erwähnt, aufgrund der Mehrfachübertragung der Symbole mittels des Verfahrens beseitigen, das Gegenstand der Europäischen Patentanmeldung EP – A1 – 0 208 872, veröffentlicht am 21.01.87, ist.

Die am Ausgang des Phasenrechners 34 der Fig. 6 anstehende mittlere Blockphase gelangt zur Weiterverarbeitung zusammen mit den Abtastwerten einerseits auf einen Subtrahierer 23, und andererseits auf einen Polaritätsdetektor 26 (Fig. 4).

Der Subtrahierer 23 ermittelt im Zusammenwirken mit einem Gewichtungsfaktor – Rechner 22 für jedes übertragene Symbol eine Grösse, in die auf der einen Seite die Signalstärke und auf der anderen Seite die Stärke eventueller Störungen eingeht, und die in Form eines Gewichtungsfaktors als Mass für die Verlässlichkeit der Symbol – Information jedem Symbol zugeordnet wird.

Vorzugsweise geschieht dies dadurch, dass zunächst im Subtrahierer 23 für jedes abgetastete Symbol die Differenz zwischen der tatsächlichen Symbolphase und der mittleren Blockphase gebildet wird:

$$(1) \qquad \Delta\phi_{ik} = /\phi_{ik} - \overline{\phi_i}/ \quad i,k = 1, 2, 3, \ldots$$

$\phi_{ik} =$ Phase des k – ten Symbols im i – ten Block,

$\Delta\phi_{ik} =$ Phasendifferenz für k – tes Symbol in i – ten Block

$\overline{\phi_i} =$ mittlere Blockphase des i – ten Blocks

Aus der Phasendifferenz $\Delta\phi_{ik}$ wird dann im Gewichtungsfaktor – Rechner 22 durch Anwendung einer Funktion jeweils ein Gewichtungsfaktor $W_{ik}$ bestimmt, der die folgenden Eigenschaften aufweist:

$$(2) \qquad W_{ik} = \infty, \quad \text{wenn} \quad \frac{m}{2} \cdot \Delta\phi_{ik} \bmod \pi = 0$$
$$(m - PSK)$$

$$W_{ik} = 0, \quad \text{wenn} \quad \frac{m}{2} \cdot \Delta\phi_{ik} \bmod \pi = \frac{\pi}{2}$$

Bevorzugt wird hier die Funktion $f(x) = 1/\tan(x)$ angewendet, um von $\Delta\phi_{ik}$ zu dem entsprechenden Gewichtungsfaktor $W_{ik}$ zu gelangen.

Neben der Bestimmung der Gewichtungsfaktoren $W_{ik}$ werden die mittlere Blockphase und die Abtastwerte aus dem Trägerphasendetektor auch dazu benutzt, um in dem nachfolgenden Polaritätsdetektor 26 die noch bestehende m – fache Phasenunsicherheit zu beseitigen. Für m = 2, d.h. beim BPSK – Verfahren hat die mittlere Blockphase eine Zweideutigkeit mit zwei um 180° gegeneinander verschobenen Phasen –

5

werten, so dass beide Werte gerade durch Vorzeichenwechsel ineinander übergehen. Beim PSK – Verfahren kommt daher die Beseitigung der Mehrdeutigkeit einer Vorzeichenbestimmung gleich. Da für das vorlie – gende Verfahren bevorzugt die BPSK – Modulation verwendet wird, wird die Schaltung 26 zur Beseitigung der Mehrdeutigkeit daher kurz Polaritätsdetektor genannt.

Nachdem mittels des Polaritätsdetektors 26 durch das in der Schweizerischen Patentanmeldung beschriebene Verfahren die relative Phasenbeziehung zwischen den Blöcken und die Symbolphasen eindeutig festgelegt worden sind, werden die zugehörigen Symbolwerte, jeweils für jedes mehrfach übertragene Symbol, unter Verwendung der in 22 errechneten Gewichtungsfaktoren, in einem Symbol – Kombinierer 25 miteinander kombiniert, wobei dem Symbol, das in seinem Block stark gestört übermittelt worden ist, und dessen Zuverlässigkeit daher gering ist, mit Hilfe des Gewichtungsfaktors bei der Kombination ein geringes Gewicht beigemessen wird.

Die Kombination der Symbole, welche dieselbe Information darstellen, ist in Fig. 7 schematisch veranschaulicht. Die Werte $S_{ik}$ und $S_{i'k'}$ entsprechender Symbole aus unterschiedlichen Blöcken, z.B. von Symbol B aus Block I und III in Fig. 3, werden in zwei Multiplikatoren 40 und 41 mit den für sie ermittelten Gewichtungsfaktoren $W_{ik}$ und $W_{i'k'}$ multipliziert und dann in einem Addierer 39 kombiniert. Das Ergebnis wird schliesslich einer Entscheidungsschaltung 38 zugeführt, die z.B. eine Schwellwertentscheidung (für m = 2) trifft, um die endgültige Entscheidung über die Informationsbit – Werte zu erhalten.

Ausgangsseitig ist in dem Empfänger 5 schliesslich noch ein Dekodierer 24 vorgesehen, der die mit dem "forward error correction code" kodierten Daten wieder in unkodierte Daten zurückverwandelt. Obgleich die Uebermittlung nach dem erfindungsgemässen Verfahren auch ohne zusätzliche Kodierung wesentliche Verbesserungen in der Verfügbarkeit mit sich bringt, wird die Fehlerrate dennoch durch Verwendung eines solchen Codes weiter abgesenkt. Bevorzugt werden daher sowohl der Kodierer 6 aus Fig. 2 als auch der entsprechende Dekodierer 24 aus Fig. 4 bei der Durchführung des Verfahrens eingesetzt.

Es bleibt schliesslich noch zu erwähnen, dass die Verstärkungsfaktor – Auswahlschaltung 16, deren Ansteuerung durch den Wert der Signalstärke aus dem Mittelwertbildner 20 bereits beschrieben worden ist, zugleich auch Informationen aus der Frequenzauswahlschaltung 18 verwenden kann, um in Abhängigkeit von der dort ausgewählten Frequenz, unabhängig von der tatsächlichen Signalstärke, bereits eine gewisse Vorauswahl des Verstärkungsfaktors zu treffen.

Insgesamt steht mit dem erfindungsgemässen Verfahren ein Verfahren zur Datenübermittlung in Stromversorgungsnetzen zur Verfügung, bei dem der Einfluss der netzspezifischen Störungen auf die Uebertragung deutlich vermindert ist.

**Patentansprüche**

1. Verfahren zur Uebermittlung von Daten über die Leitungen eines Stromversorgungsnetzes, insbeson – dere auf der Nieder – und Mittelspannungsebene, welches folgende Schritte umfasst:
   a) Codieren der zu übertragenden Information in Form von Symbolen (A,...,F), wobei zur Erhöhung der Störsicherheit zusätzlich ein sogenannter "forward error correction code" verwendet werden kann,
   b) Vervielfachung der einzelnen Symbole (A,...,F),
   c) Umstellen der Symbole (A,...,F) derart, dass Symbole, welche vorher direkt nebeneinander gelegen haben, nun weit voneinander entfernt sind,
   d) Zusammenfassen der umgestellten Symbole zu Blöcken derart, dass jedes einzelne Symbol mindestens in zwei verschiedenen Blöcken vorkommt,
   e) Uebertragen der Blöcke mittels unterschiedlicher Trägerfrequenzen zu unterschiedlichen Zeiten, wobei dadurch die Fehlerrate bei der Uebermittlung der Daten verringert wird, und
   f) die Daten durch Phasenumtastung auf die unterschiedlichen Trägerfrequenzen aufmoduliert werden.

2. Verfahren nach Anspruch 1, dadurch gekennzeichnet, dass eine Phasenumtastung mit zwei zugelas – senen Phasenwerten (BPSK = Binary Phase Shift Keying) verwendet wird.

3. Verfahren nach Anspruch 1, dadurch gekennzeichnet, dass die Trägerfrequenz nach Art eines Fre – quenzhüpfverfahrens (FH = Frequency Hopping) jeweils nach der Uebertragung einer bestimmten Anzahl von Symbolen (A,...,F) sprunghaft und pseudo – zufällig geändert wird.

**4.** Verfahren nach Anspruch 1, dadurch gekennzeichnet, dass jedes Symbol (A,...,F) zweimal übertragen wird.

**5.** Verfahren nach Anspruch 1, dadurch gekennzeichnet, dass empfängerseitig jedem Symbol (A,...,F) ein Gewichtungsfaktor ($W_{ik}$) zugeordnet wird, welcher in Abhängigkeit von der Signalstärke und der Störstärke des Empfangssignals ein Mass für die Zuverlässigkeit des jeweiligen Symbols darstellt, und dass Symbole, welche aufgrund der Mehrfachübertragung dieselbe Information repräsentieren, unter Verwendung der Gewichtungsfaktoren ($W_{ik}$) kombiniert werden.

**6.** Verfahren nach Anspruch 5, dadurch gekennzeichnet, dass die Gewichtungsfaktoren ($W_{ik}$) die folgen‐den Eigenschaften aufweisen:

$W_{ik} = \infty$, für $(m/2) \bullet \Delta\phi_{ik}$ mod $\pi = 0$
$W_{ik} = 0$. für $(m/2) \bullet \Delta\phi_{ik}$ mod $\pi = \pi/2$

für eine m‐fache Phasenumtastung, wobei $\Delta\phi_{ik}$ der Differenz zwischen der Phase für das k‐te Symbol im i‐ten Block und der mittleren Blockphase des i‐ten Blocks entspricht.

**7.** Verfahren nach Anspruch 6, dadurch gekennzeichnet, dass die Gewichtungsfaktoren ($W_{ik}$) durch die Anwendung der Funktion $f(x) = 1/\tan(x)$ erhalten werden.

**Claims**

**1.** Method for the transmission of data over the lines of a power supply network, particularly at the low and medium voltage level and which comprises the following steps:
a) encoding the information to be transmitted in the form of symbols (A, ..., F), and for increasing the noise immunity additional use can be made of a forward error correction code,
b) multiplying the individual symbols (A, ..., F),
c) converting the symbols (A, ..., F) in such a way that the symbols which were previously directly juxtaposed are now far removed from one another,
d) combining the converted symbols to form blocks, so that each individual symbol occurs in at least two different blocks,
e) transmission of the blocks by means of different carrier frequencies at different times and consequently the error rate during data transmission is reduced and
f) the data are modulated by phase shift keying to different carrier frequencies.

**2.** Method according to claim 1, characterized in that binary phase shift keying is used.

**3.** Method according to claim 1, characterized in that the carrier frequency is modified in steps and in pseudo‐random manner using frequency hopping following the transmission of a given number of symbols (A, ..., F).

**4.** Method according to claim 1, characterized in that each symbols (A, ..., F) is transmitted twice.

**5.** Method according to claim 1, characterized in that, on the receiver side, with each symbol (A, ..., F) is associated a weighting factor ($W_{ik}$), which as a function of the signal strength and interference strength of the incoming signal represents a measure for the reliability of the particular symbol and that symbols representing the same information as a result of the multiple transmission are combined using the weighting factors ($W_{ik}$).

**6.** Method according to claim 5, characterized in that the weighting factors ($W_{ik}$) have the following characteristics:

$W_{ik} = \infty$, for $(m/2) \bullet \Delta\phi_{ik}$ mod$\pi = 0$
$W_{ik} = 0$. for $(m/2) \bullet \Delta\phi_{ik}$ mod$\pi = \pi/2$

for a m‐times phase shift keying, in which $\Delta\phi_{ik}$ corresponds to the difference between the phase for the kth symbol in the ith block and the central block phase of the ith block.

**7.** Method according to claim 6, characterized in that the weighting factors ($W_{ik}$) are obtained by applying the function f(x) = 1/tan(x).

**Revendications**

**1.** Procédé pour transmettre des données par l'intermédiaire des lignes d'un réseau d'alimentation de distribution électrique, notamment en basse et moyenne tension, procédé qui comprend les étapes suivantes :

a) codage de l'information à transmettre sous la forme de symboles (A,...,F), auquel cas pour accroître la sécurité contre le parasitage, on peut utiliser en supplément un code dit "forward error correction code",

b) multiplication des différents symboles (A,...,F),

c) changement de place des symboles (A,...,F) de telle sorte que des symboles, qui étaient placés auparavant directement côte – à – côte, sont maintenant très éloignés les uns des autres,

d) réunion des symboles changés de place en des blocs de telle sorte que chaque symbole individuel apparaît au moins dans deux blocs différents,

e) transmission des blocs au moyen de fréquences porteuses différentes à des instants différents, ce qui réduit le taux d'erreurs lors de la transmission des données, et

f) les données sont modulées grâce à une manipulation de phase appliquée aux différentes fréquences porteuses.

**2.** Procédé selon la revendication 1, caractérisé en ce qu'on utilise une manipulation de phase avec deux valeurs de phases admissibles (BPSK = Binary Phase Shift Keying).

**3.** Procédé selon la revendication 1, caractérisé en ce qu'on modifie par saut et d'une manière pseudo – aléatoire la fréquence porteuse conformément à un procédé à saut de fréquence (FH = Frequency Hopping), respectivement après la transmission d'un nombre déterminé de symboles (A, ..., F).

**4.** Procédé selon la revendication 1, caractérisé en ce que chaque symbole (A, ..., F) est transmis deux fois.

**5.** Procédé selon la revendication 1, caractérisé en ce que, côté réception, à chaque symbole (A, ..., F) est associé un facteur de pondération ($W_{ik}$), qui représente, en fonction de l'intensité du signal et de l'intensité du parasitage du signal reçu, une mesure de la fiabilité du symbole respectif, et que des symboles, qui représentent la même information sur la base de la transmission multiple, sont combinés moyennant l'utilisation des facteurs de pondération ($W_{ik}$).

**6.** Procédé selon la revendication 5, caractérisé en ce que les facteurs de pondération ($W_{ik}$) possèdent les caractéristiques suivantes :

$W_{ik} = \infty$, pour $(m/2) \cdot \Delta\phi_{ik}$ mod $\pi = 0$
$W_{ik} = 0$, pour $(m/2) \cdot \Delta\phi_{ik}$ mod $\pi = \pi/2$

pour une m – ème manipulation de phase, $\Delta\phi_{ik}$ correspondant à la différence entre la phase pour le k – ème symbole dans le i – ème bloc et la phase moyenne du i – ème bloc.

**7.** Procédé selon la revendication 6, caractérisé en ce que les facteurs de pondération ($W_{ik}$) sont obtenus moyennant l'utilisation de la fonction f(x) = 1/tan(x).

FIG.1

FIG.2

FIG.3

FIG.4

FIG.5

FIG.6

FIG.7

FIG.8